# EUROPEAN PATENT SPECIFICATION

(11) **EP 1 917 383 B1**
(45) Date of publication and mention of the grant of the patent: **14.10.2009**
(21) Application number: 06760827.3
(22) Date of filing: 17.08.2006
(51) Int. Cl.: D01F 2/00, D01F 1/10

(54) **CELLULOSIC MOULDED BODY, METHOD FOR MANUFACTURING IT AND USE THEREOF**
CELLULOSISCHER FORMKÖRPER, SEINE HERSTELLUNG UND VERWENDUNG
BOITIER MOULE EN CELLULOSE, PROCEDE DE FABRICATION ET SON UTILISATION

(30) Priority: 26.08.2005 AT 14072005; 19.12.2005 AT 20282005
(43) Date of publication of application: 07.05.2008
(73) Proprietor: LENZING AKTIENGESELLSCHAFT, 4860 Lenzing (AT)
(72) Inventor: RÜF, Hartmut, A-4861 Schörfling (AT); FIRGO, Heinrich, A-4840 Vöcklabruck (AT); KRONER, Gert, A-4860 Lenzing (AT)
(74) Representative: Nemec, Harald
(86) International application number: PCT/AT2006/000342
(87) International publication number: WO 2007/022552

(56) References cited:
- WO-A2-20/05026429

## Description

The present invention relates to a cellulosic moulded body, a method for manufacturing it and uses thereof.

Especially, the present invention relates to Lyocell fibres having improved flame-retardant properties.

Lyocell fibres are cellulosic fibres produced by the so-called "amine-oxide" or "Lyocell process". In this process, the cellulose is dissolved directly in an aqueous tertiary amine-oxide without the formation of a derivative; and the solution is spun. Such fibres are also referred to as "solvent-spun" fibres. "Lyocell" is the generic name allocated by BISFA (The International Bureau for the Standardization of Man made Fibers) for cellulose fibres which are produced by dissolving cellulose in an organic solvent without the formation of a derivative and extruding fibres from said solution by means of a dry-wet spinning process or a melt-blown process. An organic solvent is thereby understood to be a mixture of an organic chemical and water. At present, N-methyl-morpholine-N-oxide (NMMO) is used as an organic solvent on a commercial scale.

In said process, the solution of the cellulose is usually extruded by means of a forming tool, whereby it is moulded. Via an air gap, the moulded solution enters a precipitation bath, where the moulded body is obtained by precipitating the solution. The moulded body is washed and optionally dried after further treatment steps. A process for the production of Lyocell fibres is described, for instance, in US-A 4,246,221. Lyocell fibres are distinguished by a high tensile strength, a high wet-modulus and a high loop strength.

The Lyocell process can also be used for producing other moulded bodies, such as films, sheets or membranes, or for producing sponges.

There have been many attempts in the prior art to modify cellulose moulded bodies, such as fibres, in order to impart thereon flame-retardant properties.

As regards moulded bodies produced according to the amine-oxide process, such as Lyocell fibres, WO 93/12173 discloses triazine compounds containing phosphorus and their use, including use in cellulose solutions in tertiary amine oxides.

WO 94/21724 describes flame retardants containing phosphorus. The use thereof for Lyocell fibres is also mentioned.

WO 94/26962 discloses a process for the manufacture of a flame retardant Lyocell fibre. In this process, a flame retardant is added during the manufacturing process of the fibres, before drying of the fibres.

According to WO 96/05356, textile materials containing Lyocell fibres are treated with compounds containing phosphorus and nitrogen.

WO 97/02315 discloses the manufacture of a flame-retardant Lyocell fibre, whereby a cyclic phosphine-oxide is added to the spinning dope.

DE 44 26 966 generally mentions the addition of filling compounds to Lyocell fibres, whereby the filling compounds are added in high amounts.

WO 96/27638 quite generally mentions silicates as flame retardant agents, which can be added to a Lyocell dope.

WO 04/081267 discloses modified fibres, which have been produced according to the amine-oxide process and to which ceramic oxides, preferably silicon dioxide, are added.

Vorbach et al., in two publications titled "Herstellung keramischer Hohlmembranen und - filamente nach dem Lyocell-Verfahren" in Keramische Zeitschrift 50 (3) 1998, pp. 176-179 and "Keramische Hohlmembranen, Filamente und Strukturwerkstoff auf Basis des Alceru-Verfahrens" in Technische Textilien (41), 1998, pp. 188-193, mention pore forming materials which can be added to cellulosic moulded bodies, including alumosilicates. According to the process disclosed, cellulose only serves as a carrier polymer, which is subsequently burned out in order to form a ceramic moulded body.

WO 03/24890 and WO 03/24891, respectively, disclose the addition of alumosilicates to amine-oxide-cellulose spinning dopes for the manufacture of ceramic fibres.

WO 00/53833 discloses the use of alumosilicates in a process for the manufacture of bicomponent fibres. Again, the purpose of the process disclosed in this document is to produce ceramic moulded bodies.

The above processes have several disadvantages: Some of the known processes are expensive or use substances which are questionable from an ecological viewpoint. Many of the processes published up to now are not compatible with the requirements of a continuous fibre production process. For this reason, up to now none of the above proposals has reached the stage of production in large scale.

Therefore, there is a desire for a flame-retardant cellulosic moulded body, especially a fibre, which can be manufactured in an economical way, there being no physiological or ecological concerns regarding the flame retardant agent employed, and where no difficulties when transferring the production process to large-scale production are to be expected.

This object is achieved by a cellulosic moulded body containing a cellulose/clay nanocomposite, said moulded body being characterized in that the clay component of said nanocomposite comprises a material selected from the group consisting of unmodified hectorite clays.

In the moulded body of the invention, the cellulose/clay nanocomposite is not only present on the surface of the cellulosic body, but is also dispersed throughout the cellulosic matrix of the moulded body. This is achieved by incorporating the hectorite clay material in the cellulosic moulded body. The skilled artisan is aware of the possibilities to incorporate materials into cellulosic moulded bodies, such as adding the materials to a solution of cellulose before moulding, or to a precursor of said solution, such as a suspension of cellulose in a cellulose solvent.

Under "unmodified clay", a clay which has not been chemically pretreated is to be understood.

It is known to produce so-called "nanocomposites" of clays and polymers, wherein the clay is intimately mixed with the polymer matrix. In order to produce such nanocomposites, it is often necessary to pretreat the clay material with hydrophobic organic cations, such as alkylammonium cations. By such pretreatment, the layers of SiO₄-tetrahedrons making up the clay are exfoliated, and the hydrophobic properties imparted on the clay layers render the clay compatible with various polymers.

Okamoto M. provides a good overview over the technology of Polymer/clay nanocomposites in a review in "Encyclopedia of Nanoscience and Nanotechnology", Ed. H.S. Nalwa, Volume 8, pp 791-843, American Scientific Publishers 2004.

Nanocomposites of clays and polymers are known to have improved flame-retardant properties, such as an increased degradation temperature and enhanced char yields.

X. Liu et al., in a talk named "Cellulose/Clay Nanocomposites" held at the 2nd International Conference on Eco-Composites, 1-2 September 2003, Queen Mary, University of London, UK, describe addition of a montmorrilonite clay (Cloisite 30B of Messr. Southern Clay), which is a clay modified with organic cations (methyl-tallow-bis(2-hydroxyethyl) ammoniumchloride-montmorillonite), to a cellulose solution in NMMO. The solution is cast into a film, which is then coagulated by dipping into water.

In several publications, ("Preparation of Cotton/Clay Nanocomposites", Polymer Preprints 2002, Vol 43(2), 1279-1280; "Preparation and Thermal Analysis of Cotton-Clay Nanocomposites", J. Appl. Polym. Sci., Vol. 92, 2125-2131 (2004); "Cellulose-Based Nanocomposites: "Fiber Production and Characterization" Polymeric Materials: Science and Engineering 2004, Vol. 90, 40-50; "Laboratory Scale and Nonwovens Production of Cellulose/Clay Nanocomposites", Polymeric Materials: Science and Engineering 2004, Vol. 91, 532-533; US 6,893,492 B2 and WO 2005/026429 A2), White et al. describe the production of nanocomposites of cellulose comprising up to 15% montomorillonite.

According to these publications, montmorillonite, which has been pretreated with organic cations, is dispersed in 50% NMMO. Cellulose material is added to this dispersion, and a solution is produced. It is described that the solution is extruded via an automated syringe pump to form fibres. According to these publications, pretreatment of the montmorillonite clay with an alkylammonium cation such as a dodecyl-ammonium salt is mandatory.

JP-A 2002-346509 discloses shaped bodies containing cellulose and, inter alia, montmorillonite by mixing montmorillonite into viscose and regenerating the cellulose with sulphuric acid. A shaped body containing 25% - 75% of inorganic fillers/clay is claimed for use as a cellulose support for garbage disposal.

In the conference lecture "Biodegradable film nanocomposites based on cellulose and starch" held by Golova, L.K.; Kuznetsova, L.K.; Korolev, Yu.M.; Kulichikhin, V.G. (published in: Editor: Bondar, V.A. Efiry Tsellyulozy i Krakhmala: Sintez, Svoistva, Primenenie, Materialy Yubileinoi Vserossiiskoi Nauchno-Tekhnicheskoi Konferntsii s Mezhdunarodnym Uchastiem, 10th, Suzdal. Russian Federation, May 5-8, 2003, 287-290 Publisher: Izdatel'stvo "Posad", Vladimir, Russia), the mixing of montmorillonite either in the sodium form or in the form of hydrophobically modified montmorillonite (Cloisite 20 A, producer Southern Clay, which is a montmorillonite modified with dimethyl-dihydrogenated tallow quaternary ammonium chloride) to a cellulose-NMMO-solution is disclosed.

It has now been surprisingly found that it is possible to produce a cellulosic moulded body, such as a fiber, with improved flame-retardant properties, by forming a cellulose/clay nanocomposite in the moulded body, which nanocomposite comprises an unmodified hectorite clay (i.e. a hectorite clay which has not been chemically pretreated at all).

Especially, it has been found that hectorite, a clay of the smectite group, not only can be successfully incorporated into a cellulosic moulded body without any chemical pretreatment, thereby forming a cellulose/hectorite nanocomposite, but also confers to said moulded body improved flame-retardant properties which are superior to those of cellulosic moulded bodies incorporating pretreated montmorillonite clay.

In the present invention, synthetic hectorite types are preferred over naturally occurring hectorite types.

Preferably, the portion of the clay component in the moulded body according to the invention ranges from 5 to 40 % by weight of the moulded body.

In a further preferred embodiment, the moulded body has been produced from a solution of cellulose in an aqueous tertiary amine-oxide. This means, the cellulosic moulded body has been produced by the Lyocell process. The tertiary amine-oxide preferably is NMMO.

The moulded body may be present in the form of a filament fibre, a staple fibre, a film or a membrane.

An especially preferred embodiment of the present invention is a Lyocell staple fibre, containing a cellulose/clay nanocomposite with unmodified hectorite clay as the clay component.

Moulded bodies in the form of fibres may be further processed to yarns, woven products such as fabrics, knits, and nonwoven products.

A process for the manufacturing of the cellulose moulded body of the present invention, using the Lyocell process, comprises the subsequent steps of
a) providing cellulose
b) preparing a mixture of said cellulose with an aqueous tertiary amine-oxide
c) converting said mixture into a solution of cellulose in the aqueous tertiary amine-oxide
d) moulding said solution via a moulding tool
e) precipitating said solution in a precipitating fluid,
and is characterized in that at least one of steps a) to c) is carried out in the presence of a material selected from the group consisting of unmodified hectorite clays.

In the process according to the invention, the clay material may for example be added to
- a cellulose pulp as the starting material of step a)
- during preparing the suspension of cellulose in NMMO or to the already prepared suspension (step b) or
- during dissolving the cellulose or to the solution of cellulose in NMMO (step c).

It is well-known to the skilled artisan how to add a material in one of steps a) to c).

A preferred embodiment of the process according to the invention is characterized in that in step b) a first suspension of the clay in the aqueous tertiary amine-oxide is prepared, and that the cellulose is added to said suspension in order to form a second suspension, which can then be further processed to a solution.

NMMO is preferably used as the aqueous tertiary amine-oxide.

When dispersing the clay in the aqueous tertiary amine-oxide, preferably high shear forces are applied to the clay. This can be accomplished for example by preparing the dispersion in an Ultra-Turrax® mixer.

The portion of the clay in said dispersion is preferably from 1 to 4 % by weight of dispersion.

An especially preferred embodiment of the process according to the invention comprises dispersing unmodified hectorite clay in an aqueous NMMO containing 60 to 84% by weight NMMO by means of an Ultra-Turrax® mixer, afterwards adding the required amount of cellulose and forming a suspension containing both the cellulose and the hectorite clay, and forming a solution from said suspension by methods well-known per se.

The cellulosic moulded body according to the invention, especially when being in the form of a fibre, may be present in the form of a blend with other types of fibres, especially inherently flame-resistant fibres such as glass, carbon, polyphenylene benzobisoxazole, polybenzimidazole, poly(p-phenylene benzothiazoles), para-aramids, meta-aramids, fluorocarbons, polyphenylene sulfides, melamines, polyimides polyamideimides, partially oxidized polyacrylonitrile, pre-oxidized fibres, novoloids, chloropolymeric fibres such as those containing polyvinyl chloride, polyvinylidene homopolymers and copolymers, modacrylics which are vinyl chloride or vinylidene copolymer variants of acrylonitrile fibers, fluoropolymer fibres such as polytetrafluoroethylene or polyvinylidene fluoride, flame retardant viscose rayons such as rayon fibres containing a phosphorus compound, silica or alumosilicate modified silica.

Furthermore, a cellulosic fibre according to the invention may be present in a blend with natural fibres such as cotton, flax, hemp, kenaf, ramie, wood pulp, wool, silk, mohair or cashmere or with man-made-fibres such as viscose rayon, polynosic rayon, cuprammonium rayon, lyocell, cellulose esters such as cellulose acetate, polyamides such as nylon 6, nylon 6,6, nylon 11, polyesters such as polyethylene terephthalate, polypropylene terephthalate, polybutylene terephthalate, polytetramethylene terephthalate, copolyesters, polyurethane fibres, polyvinyl alcohol fibres, polyolefins such as polypropylene or polyethylene, polylactides, acrylics and bi-component fibres.

The fibres which are used to be blended with the cellulosic fibre according to the invention may have been rendered flame retardant by the application of flame retardant chemicals. Flame retardant agents which can be utilized in accordance with embodiments of the present invention include, but are not limited to borates such as boric acid, zinc borate or borax, sulfamates, phosphates such as ammonium polyphosphate, organic phosphorous compounds, halogenated compounds such as ammonium bromide, decabromodiphenyl oxide, or chlorinated paraffin, inorganic hydroxides such as aluminum or magnesium hydroxide, antimony compounds, nitrogen compounds and silica or silicates.

Furthermore, fibres which have been treated with an intumescent compound such as melamine, pentaerythritol, fluorocarbon, graphite, phosphated melamine, borated melamine, sugars, and polyols, may be blended with the fibre according to the present invention.

The fibre according to the present invention may be present in a blend containing only one, or several of the above-listed fibre types.

The present invention also relates to a textile assembly containing a cellulosic fiber according to the present invention.

The textile assembly according to the invention may be present in the form of a woven or nonwoven article.

The nonwoven article maybe formed by way of a method selected from the group consisting of dry-laying, air-laying and wet-laying.

Furthermore, the nonwoven article may be bonded by way of a method selected from the group consisting of thermal bonding, needle-punching, hydroentanglement and chemical bonding.

In the textile assembly according to the present invention, the cellulosic fiber may be present in a mixture with another fiber material, as mentioned above.

In an especially preferred embodiment, the textile assembly according to the invention is characterized in that the cellulosic fiber is present in a mixture with polyester fiber, wherein the ratio of cellulosic fiber to polyester fiber in the mixture is from 1:9 to 9:1, preferably 3:7 to 7:3.

It can be shown that a fibre blend containing only about 30% of a cellulosic fibre according to the present invention and about 70% of non-modified polyester fibre, shows significantly improved resistance to ignition and a lower rate of burning as compared with 100% polyester fibre.

The cellulosic moulded body and the textile assembly according to the present invention have improved flame-retardant properties, such as resistance against ignition.

Hence, the cellulosic moulded body according to the present invention, especially in the form of a Lyocell staple fibre, and/or the textile assembly of the present invention, are useful as flame-retardant articles, i.e. in applications where improved flame-retardant properties are required.

Preferable applications of the cellulosic moulded body and/or the textile assembly according to the invention include the use as a component of articles of furniture (including upholstered sleep products such as mattresses, futons, and mattress foundations), barrier layers in furniture (including barrier layers between the exterior fabric and the inner stuffing of mattresses and upholstered chaits, mattress covers, mattress pads, fiber batting and casing mterial), top-of-the-bed-products (such as sleeping pads, comforters, duvets, pillows, bedspreads, quilts and fibre fill), panel fabric furniture, wall panels, backing for curtains and rugs, curtains, drapes, floor coverings, tiles, protective apparel, automotive trim surface materials, carpets, transportation seating, textile and nonwoven products in electronic devices (e.g. felts below keypads), bedsheets, fitted sheets, bedcovers, bedlinen, towels, blankets in airplanes, apparel (such as T-shirts, underwear, outerwear, trousers, shirts, socks), wall paper, workwear, insulation material, such as for industrial insulation, automotive insulation and housing insulation, noise insulation materials for household devices, fabrics for decoration, noise dampening for floorings, night wear with reduced flammability, electrical papers, such as electrical papers for insulations, capacitors and transformers, flock, filters, such as air filters, oil filters and fuel filters, military uniforms and clothing, tents, awnings, children's wear, medical drapes and gowns, lightweight fabrics, oil rig and similar clothing, lamp shades, and/or as reinforcement fibers, such as in plastic materials, e.g. in polypropylene.

In the following, the present invention is described in more detail by way of examples of preferred embodiments of the invention.

### Examples:

### Production Example 1 - Discontinuous production

Synthetic hectorite, type "Optigel SH" (Messrs. Südchemie) was used in this example. This is a hectorite clay which has not been modified.

A dispersion containing 3.6 % by weight of the hectorite clay in 78 % aqueous NMMO was produced in a high-shear mixer (Ultra-Turrax® Type T50, Messrs. IKA Maschinenbau, Janke & Kunkel, DE) by mixing the components for 1 hour at 8000 rpm.

Cellulose pulp (Type "Bahia", SCAN-viscosity 400) was added to this dispersion in a mixer. The mixture was stirred at 80°C for one hour. After that, water was distilled off at 95°C in order to produce a spinning dope containing 13 % cellulose, 3 % hectorite clay, 11 % water and 76 % NMMO.

The spinning dope, after having been filtered, was spun into fibres via a jet-wet-spinning process known as such, employing a spinneret with 247 holes of 160 µm diameter each, with an output of 0.045 g dope per spinning hole per minute, an air gap of 20 mm length and a precipitation bath containing 25 % aqueous NMMO. The denier of the fibres was 6.7 dtex.

### Production Example 2 - Continuous production at a semi-commercial plant

A dispersion containing 4 % unmodified hectorite clay (type "Optigel SH") in 78 % aqueous NMMO was manufactured in a similar manner as described in example 1, using an Ultra-Turrax® high shear mixer, Type T115KT of Messrs. IKA Maschinenbau, Janke & Kunkel.

In a continuous process, cellulose pulp (Type "Bahia", SCAN-viscosity 400) was added to this dispersion. The suspension thus obtained was converted into a solution in a thin-film treatment apparatus according to the process disclosed in EP 0 356 419 A. The resulting solution was composed of 12.0% cellulose, 2.56% Optigel SH, 11.84% water and 73.6% NMMO. The spinning dope was filtered and spun via a jet-wet-process to fibres.

Three different types of fibres were produced, the first type having a titre of 6.7 dtex and a cutting length of 60 mm, the second type having a titre of 3.3 dtex and a cutting length of 51 1 mm, and the third type having a denier of 1.3 dtex and a cutting length of 38 mm.

### Test methods:

To assess the flammability performance of the fibre samples, a test method was devised in which the fibre is formed into a sheet and exposed to a small flame.

In this test, by means of a rotor-ring-device, type "3 USTER UDTA 3" (Messrs. Hollingworth) a card sliver is produced. In a laboratory press, a 5 mm short cut is produced. 7 g of this short cut are dispersed by means of a laboratory desintegrator according to ISO 5263 in 2 L of water, employing 3000 rotations of the stirrer. The fibre suspension is filled into the cylinder of a sheet forming apparatus of the "Rapid-Kothen" type according to ISO 5269/2 and DIN 54358, respectively (manufactured by Messrs. Paper Testing Instruments GmbH) and, according to an automated program, a sheet of 200 g/m² is produced. The sheet is dried at 92°C for 20 minutes and conditioned.

In order to carry out a test for flame resistance, this cellulose sheet is fixed in a vertically ' arranged round steel frame with an inner diameter of 150 mm. A small gas flame (vertical size 4 cm, gas consisting of 3.4% propane, 49.4% butane, 17% acetone, 1.5% methylacetylene, 27.7% propene and 1% propadiene) is moved horizontally towards the sheet, whereby the vertical distance to the lower inner edge of the steel frame is 2 cm and the horizontal distance to the sheet is 1 cm.

The action of the flame is maintained for 5 minutes. The behaviour of the sheet towards the action of the flame is observed (i.e. whether the flame breaks through the sheet or the material is only partly or fully charred and forms a barrier). If the sheet is charred, the size of the charred area and its robustness (i.e. whether the sheet is destroyed upon touching or maintains a certain amount of residual tenacity) are observed. A larger charred area means that the sheet has suffered greater damage due to the sustained combustion. A charred area which is fragile and easily broken when touched would offer less protection to underlying materials.

In the following tables, Lyocell staple fibres according to the invention and produced according to examples 1 and 2, respectively, were compared with
- standard Lyocell staple fibres (containing no modifying agent),
- Lyocell staple fibres containing other materials, such as kaolin, talkum, and two different hydrophobically modified montmorillonite clays, and
- a commercially available flame-retardant viscose fibre (Type "VISCOSE FR").

The materials underlying Test Examples 1 to 6 of the table were produced by applying the conditions set out in Production Example 1.

The materials underlying Test Examples 9 to 11 of the table were produced by applying the conditions set out in Production Example 2.

**Table**

| Test Example | Fibre Type | Additive | Manufacturer | Type of additive | Denier of fibre (dtex) | Amount of additive (% by weight of cellulose) | Flame break through time (s)* | Portion of charred area (%) | Robustness of charred area |
|---|---|---|---|---|---|---|---|---|---|
| 1 | Lyocell | Laponite RD | Rockwood Additives | Unmodified Hectorite | 6.7 | 23.0 | >300 | 30.3 | flexible, is not destroyed upon touching |
| 2 | Lyocell | Optigel SH | Südchemie | Unmodified Hectorite | 6.7 | 23.0 | >300 | 38.4 | flexible, is not destroyed upon touching |
| 3 (C) | Lyocell | Ultragloss 90 | Engelhard | Kaolin | 6.7 | 23.0 | >300 | 71.8 | is destroyed upon touching |
| 4 (C) | Lyocell | Talkum A 7 | Naintsch | Talkum | 6.7 | 23.0 | -60 | 70.8 | is destroyed upon touching |
| 5 (C) | Lyocell | Nanofil - 9 | Südchemie | Montmorillonite, modified with benzylmethyl distearylammonium salt | 6.7 | 23.0 | >300 | 76.9 | flexible, is not destroyed upon touching |
| 6 (C) | Lyocell | Nanofil - 8 | Südchemie | Montmorillonite, modified with dimethyldistearylammonium salt | 6.7 | 23.0 | >300 | 100 | destroyed |
| 7 (C) | Lenzing Viskose FR® | | | | 5.5 | | -70 | 33 | Minor damage |
| 8 (C) | Lyocell | none - | | - | 6.7 | | burns completely | | |
| 9 | Lyocell | Optigel SH | Südchemie | Unmodified Hectorite | 6.7 | 21.3 | >300 | 31.3 | flexible, is not destroyed upon touching |
| 10 | Lyocell | Optigel SH | Südchemie | Unmodified Hectorite | 3.3 | 21.3 | >300 | 45.5 | flexible, is not destroyed upon touching |
| 11 | Lyocell | Optigel SH | Südchemie | Unmodified Hectorite | 1.3 | 21.3 | -70 | 47.2 | flexible, is not destroyed upon touching |

| | | | | | | | | | |
|---|---|---|---|---|---|---|---|---|---|
| * A flame break-through time of > 300s means that the test was stopped after 300 s without the flame having broken through the cellulose sheet. | | | | | | | | | |

As apparent from the above table, the Lyocell fibres according to the present invention are clearly superior to the other Lyocell fibres according to the comparison examples (marked with (C)) and comparable to the well-established commercially available Lenzing Viscose FR®-fibre. Especially, if compared with the Lyocell fibres containing modified montmorillonite, it can be seen that the portion of charred area of the montmorillonite-containing fibres is much higher than that of the fibres according to the invention.

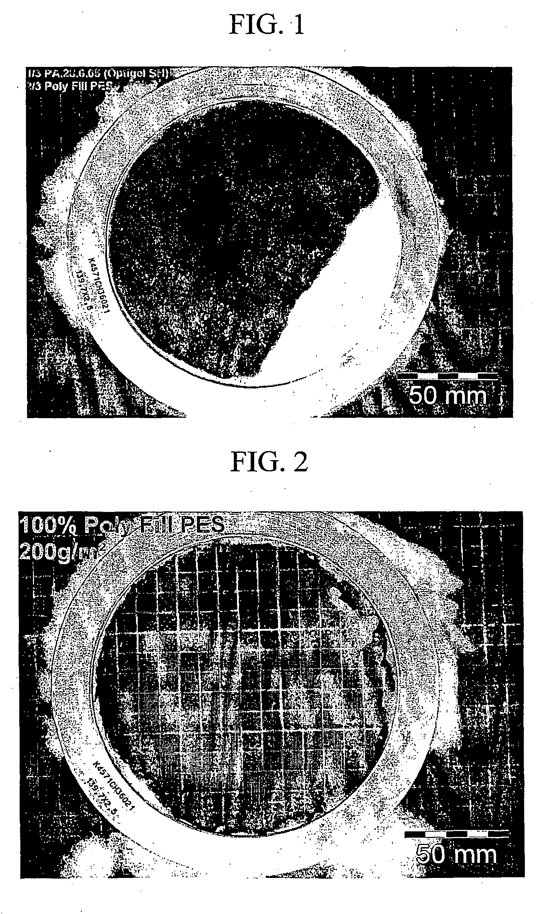

Figures 1 and 2, respectively, show the results of the above-described test with a fiber sheet made of 33% Lyocell fiber containing Optigel® SH hectorite clay and 67% polyester fiber (figure 1) and a fiber sheet made of 100% polyester fiber.

It is clearly apparent from the figures, that the mixture of the fiber according to the invention and polyester fiber is only partly charred (cf. the black area in figure 1), whereas a sheet made from 100% polyester fiber is completely burned down.

This means that even if the fiber according to the invention is admixed in only small portions to other fiber types, excellent resistance against the action of a flame can be achieved.

The response to flame contact of the fibre according to example 9 of the above table was, furthermore, determined additionally according to DIN 54 336 (Vertical method, edge ignition).

The fibre was tested in the form of a lightly needled nonwoven:

| Area Weight (g/m²) | Length of destroyed area (mm) | Velocity of flame spreading (mm/s) | Remarks |
|---|---|---|---|
| 50 | 430 | 53 | |
| 100 | 430 | 10 | |
| 200 | 30 | - | Flame extinguishes after 13 s |

## Claims

1. Cellulosic moulded body containing a cellulose/clay nanocomposite **characterized in that** the clay component of said nanocomposite comprises an unmodified hectorite clay, i.e. a hectorite clay which has not been chemically pretreated.

2. Cellulosic moulded body according to claim 1, **characterized in that** the portion of the clay component ranges from 5 to 40 % by weight of the moulded body.

3. Cellulosic moulded body according to claim 1 or 2, **characterized in that** the moulded body has been produced from a solution of cellulose in an aqueous tertiary amine-oxide.

4. Cellulosic moulded body according to any of the preceding claims, **characterized in that** it is present in the form of a filament fibre, a staple fibre, a film or a membrane.

5. Process for the manufacturing of a cellulosic moulded body according to any of claims 1 to 4, comprising the subsequent steps of
a) providing cellulose
b) preparing a mixture of said cellulose with an aqueous tertiary amine-oxide
c) converting said mixture into a solution of cellulose in the aqueous tertiary amine-oxide
d) moulding said solution via a moulding tool
e) precipitating said solution in a precipitating fluid,
**characterized in that** at least one of steps a) to c) is carried out in the presence of an unmodified hectorite clay, i.e. a hectorite clay which has not been chemically pretreated.

6. Process according to claim 5, **characterized in that** in step b) a suspension of the clay in the aqueous tertiary amine-oxide is prepared, and that the cellulose is added to said suspension.

7. Process according to claim 6, **characterized in that** the clay is dispersed in said aqueous tertiary amine-oxide by applying high shear forces.

8. Process according to claim 6 or 7, **characterized in that** the portion of the clay in said dispersion is from 1 to 4 % by weight of dispersion.

9. A textile assembly containing a cellulosic fiber according to any of claims 1 to 4.

10. A textile assembly according to claim 9 in the form of a woven or nonwoven article.

11. A textile assembly according to claim 9 or 10, **characterized in that** the cellulosic fiber is present in a mixture with another fiber material.

12. A textile assembly according to claim 11, **characterized in that** the cellulosic fiber is present in a mixture with polyester fiber, wherein the ratio of cellulosic fiber to polyester fiber in the mixture is from 1:9 to 9:1, preferably 3:7 to 7:3.

13. Use of a cellulosic moulded body according to any one of claims 1 to 4 and/or a textile assembly according to any one of claims 9 to 12 as a flame-retardant article.

14. Use of a cellulosic moulded body according to any one of claims 1 to 4 and/or a textile assembly according to any one of claims 9 to 13 as a component of articles of furniture (including upholstered sleep products such as mattresses, futons, and mattress foundations), barrier layers in furniture (including barrier layers between the exterior fabric and the inner stuffing of mattresses and upholstered chaits, mattress covers, mattress pads, fiber batting and casing mterial), top-of-the-bed-products (such as sleeping pads, comforters, duvets, pillows, bedspreads, quilts and fibre fill), panel fabric furniture, wall panels, backing for curtains and rugs, curtains, drapes, floor coverings, tiles, protective apparel, automotive trim surface materials, carpets, transportation seating, textile and nonwoven products in electronic devices (e.g. felts below keypads), bedsheets, fitted sheets, bedcovers, bedlinen, towels, blankets in airplanes, apparel (such as T-shirts, underwear, outerwear, trousers, shirts, socks), wall paper, workwear, insulation material, such as for industrial insulation, automotive insulation and housing insulation, noise insulation materials for household devices, fabrics for decoration, noise dampening for floorings, night wear with reduced flammability, electrical papers, such as electrical papers for insulations, capacitors and transformers, flock, filters, such as air filters, oil filters and fuel filters, military uniforms and clothing, tents, awnings, children's wear, medical drapes and gowns, lightweight fabrics, oil rig and similar clothing, lamp shades, and/or as reinforcement fibers, such as in plastic materials, e.g. in polypropylene.

## Patentansprüche

1. Cellulosischer Formkörper, enthaltend einen Cellulose/Ton-Nanoverbundstoff, **dadurch gekennzeichnet, dass** der Tonbestandteil des Nanoverbundstoffs einen unmodifizierten Hectorit-Ton, d.h., einen Hectorit-Ton, der nicht chemisch vorbehandelt wurde, umfasst.

2. Cellulosischer Formkörper gemäß Anspruch 1, **dadurch gekennzeichnet, dass** der Anteil des Tonbestandteils 5 bis 40 Gew.% des Formkörpers beträgt.

3. Cellulosischer Formkörper gemäß Anspruch 1 oder 2, **dadurch gekennzeichnet, dass** der Formkörper aus einer Celluloselösung in einem wässrigen tertiären Aminoxid hergestellt wurde.

4. Cellulosischer Formkörper gemäß einem der vorhergehenden Ansprüche, **dadurch gekennzeichnet, dass** er in Form einer Filamentfaser, einer Stapelfaser, einer Folie oder einer Membran vorliegt.

5. Verfahren zur Herstellung eines cellulosischen Formkörpers gemäß einem der Ansprüche 1 bis 4, umfassend die folgenden Schritte:
a) das Bereitstellen von Cellulose
b) das Herstellen einer Mischung der Cellulose mit einem wässrigen tertiären Aminoxid
c) das Umwandeln der Mischung in eine Celluloselösung im wässrigen tertiären Aminoxid
d) das Ausformen der Lösung mittels eines Formwerkzeugs
e) das Fällen der Lösung in einer Fällflüssigkeit,
**dadurch gekennzeichnet, dass** zumindest einer der Schritte a) bis c) in Gegenwart eines unmodifizierten Hectorit-Tons, d.h., eines Hectorit-Tons, der nicht chemisch vorbehandelt wurde, durchgeführt wird.

6. Verfahren gemäß Anspruch 5, **dadurch gekennzeichnet, dass** in Schritt b) eine Suspension des Tons im wässrigen tertiären Aminoxid hergestellt wird und dass die Cellulose zu dieser Suspension hinzugefügt wird.

7. Verfahren gemäß Anspruch 6, **dadurch gekennzeichnet, dass** der Ton durch das Aufbringen von hohen Scherkräften im wässrigen tertiären Aminoxid dispergiert wird.

8. Verfahren gemäß Anspruch 6 oder 7, **dadurch gekennzeichnet, dass** der Anteil des Tons in der Dispersion 1 bis 4 Gew.% der Dispersion beträgt.

9. Textiles Flächengebilde, enthaltend eine Cellulosefaser gemäß einem der Ansprüche 1 bis 4.

10. Textiles Flächengebilde gemäß Anspruch 9 in Form eines gewebten oder nichtgewebten Gegenstands.

11. Textiles Flächengebilde gemäß Anspruch 9 oder 10, **dadurch gekennzeichnet, dass** die Cellulosefaser in einer Mischung mit einem anderen Fasermaterial vorliegt.

12. Textiles Flächengebilde gemäß Anspruch 11, **dadurch gekennzeichnet, dass** die Cellulosefaser in einer Mischung mit Polyesterfaser vorliegt, wobei das Verhältnis von Cellulosefaser zu Polyesterfaser in der Mischung von 1:9 bis 9:1, vorzugsweise von 3:7 bis 7:3, reicht.

13. Verwendung eines cellulosischen Formkörpers gemäß einem der Ansprüche 1 bis 4 und/oder eines textilen Flächengebildes gemäß einem der Ansprüche 9 bis 12 als flammenhemmender Gegenstand.

14. Verwendung eines cellulosischen Formkörpers gemäß einem der Ansprüche 1 bis 4 und/oder eines textilen Flächengebildes gemäß einem der Ansprüche 9 bis 13 als Bestandteil von Möbelgegenständen (einschließlich gepolsterten Schlafprodukten, wie z.B. Matratzen, Futons und Matratzengrundlagen), Sperrschichten in Möbeln (einschließlich Sperrschichten zwischen dem äußeren Stoff und der Innenfüllung von Matratzen und Polstersesseln, Matratzenschonern, Matratzenauflagen, Faserwatte und Hüllmaterial), auf Betten liegenden Produkten (wie z.B. Schlafunterlagen, Bettdecken, Schlafdecken, Kissen, Bettüberzügen, Steppdecken und Faserfüllung), Möbeln mit Stoffbahnen, Wandplatten, Verstärkungen für Vorhänge und Teppiche, Vorhängen, Draperien, Bodenbelägen, Fliesen, Schutzkleidung, Oberflächenmaterialien von Fahrzeuginnenausstattungen, Teppichen, Transport-Auflageflächen, Textil- und Vliesprodukten in elektronischen Geräten (z.B. Filzbezügen unter Tastaturen), Bettlaken, Spannbettlaken, Bettbezügen, Bettwäsche, Handtüchern, Decken in Flugzeugen, Bekleidung (wie z.B. T-Shirts, Unterwäsche, Oberbekleidung, Hosen, Hemden, Socken), Tapeten, Arbeitskleidung, Isoliermaterial wie z.B. für die industrielle Isolierung, Fahrzeugisolierung und Wohnungsisolierung, Lärmisoliermaterialien für Haushaltsgeräte, Zierstoffen, Schalldämmung für Bodenbeläge, Nachtbekleidung von reduzierter Entflammbarkeit, Elektropapieren, wie z.B. Elektropapieren für Isolierungen, Kondensatoren und Transformatoren, Flockfasern, Filtern, wie z.B. Luftfiltern, Ölfiltern und Kraftstofffiltern, militärischen Uniformen und militärischer Bekleidung, Zelten, Markisen, Kinderkleidung, medizinischen Vorhängen und Umhängen, leichten Stoffen, Bekleidung für Bohrinseln und ähnlicher Bekleidung, Lampenschirmen und/oder als Verstärkungsfasern wie z.B. in Kunststoffmaterialien, z.B. in Polypropylen.

## Revendications

1. Corps moulé cellulosique contenant un nanocomposite de cellulose/argile **caractérisé en ce que** le composant argile dudit nanocomposite comprend une argile hectorite non modifiée, c'est-à-dire une argile hectorite qui n'a pas été chimiquement prétraitée.

2. Corps moulé cellulosique selon la revendication 1, **caractérisé en ce que** la partie du composant argile est dans la plage de 5 à 40% en poids du corps moulé.

3. Corps moulé cellulosique selon la revendication 1 ou 2, **caractérisé en ce que** le corps moulé a été produit à partir d'une solution de cellulose dans un oxyde d'amine tertiaire aqueux.

4. Corps moulé cellulosique selon l'une quelconque des revendications précédentes, **caractérisé en ce qu'**il est présent sous la forme d'une fibre filamenteuse, d'une fibre courte, d'un film ou d'une membrane.

5. Procédé de fabrication d'un corps moulé cellulosique selon l'une quelconque des revendications 1 à 4, comprenant les étapes subséquentes de
a) prévision d'une cellulose
b) préparation d'un mélange de ladite cellulose avec un oxyde d'amine tertiaire aqueux
c) conversion dudit mélange en une solution de cellulose dans l'oxyde d'amine tertiaire aqueux
d) moulage de ladite solution par l'intermédiaire d'un outil de moulage
e) précipitation de ladite solution dans un fluide de précipitation,
**caractérisé en ce qu'**au moins une des étapes a) à c) est mise en oeuvre en présence d'une argile hectorite non modifiée, c'est-à-dire une argile hectorite qui n'a pas été chimiquement prétraitée.

6. Procédé selon la revendication 5, **caractérisé en ce qu'**à l'étape b), une suspension de l'argile dans l'oxyde d'amine tertiaire aqueux est préparée, et que la cellulose est ajoutée à ladite suspension.

7. Procédé selon la revendication 6, **caractérisé en ce que** l'argile est dispersée dans ledit oxyde d'amine tertiaire aqueux par application de forces de cisaillement élevées.

8. Procédé selon la revendication 6 ou 7, **caractérisé en ce que** la partie de l'argile dans ladite dispersion est de 1 à 4% en poids de la dispersion.

9. Ensemble textile contenant une fibre cellulosique selon l'une quelconque des revendications 1 à 4.

10. Ensemble textile selon la revendication 9 sous la forme d'un article tissé ou non tissé.

11. Ensemble textile selon la revendication 9 ou 10, **caractérisé en ce que** la fibre cellulosique est présente dans un mélange avec un autre matériau fibreux.

12. Ensemble textile selon la revendication 11, **caractérisé en ce que** la fibre cellulosique est présente dans un mélange avec une fibre polyester, dans lequel le rapport de la fibre cellulosique sur la fibre polyester dans le mélange est de 1:9 à 9:1, préférablement 3:7 à 7:3.

13. Utilisation d'un corps moulé cellulosique selon l'une quelconque des revendications 1 à 4 et/ou d'un ensemble textile selon l'une quelconque des revendications 9 à 12 comme un article ignifugé.

14. Utilisation d'un corps moulé cellulosique selon l'une quelconque des revendications 1 à 4 et/ou d'un ensemble textile selon l'une quelconque des revendications 9 à 13 comme un composant d'articles d'ameublement (incluant des produits rembourrés pour le sommeil tels que des matelas, des futons, et des fondements de matelas), des couches barrières dans du mobilier (incluant des couches barrières entre l'étoffe extérieure et le rembourrage intérieur de matelas et de chaises rembourrées, de couvre-matelas, de coussinets de matelas, de matière fibreuse de rembourrage et d'enveloppe), de produits pour le dessus de lits (tels que des matelas de sol, des couettes, des duvets, des oreillers, des jetés de lit, des édredons et des garnitures fibreuses), du mobilier en panneaux de toile, des panneaux muraux, des doublures pour rideaux et carpettes, des rideaux, des tentures, des revêtements de sol, des carreaux, des vêtements de protection, des matériaux de surface de garnitures automobiles, des tapis, des sièges de moyens de transport, des produits textiles et non tissés dans des dispositifs électroniques (par exemple des feutres sous des pavés numériques), des draps de lit, des draps-housses, des couvre-lits, des parures de lit, des serviettes, des couvertures dans des avions, des vêtements (tels que T-shirts, sous-vêtements, vêtements de dessus, pantalons, chemises, chaussettes), des papiers muraux, des vêtements de travail, des matériaux d'isolation, tels que pour une isolation industrielle, une isolation automobile et une isolation de la maison, des matériaux d'isolation sonore pour des dispositifs électroménagers, des étoffes pour la décoration, des produits de réduction du bruit pour des sols, des vêtements de nuit à inflammabilité réduite, des papiers pour usage électrique, tels que des papiers pour usage électrique pour des isolations, des condensateurs et des transformateurs, des flocs, des filtres, tels que des filtres à air, des filtres à huile et des filtres à carburant, des uniformes et des vêtements militaires, des tentes, des auvents, des vêtements pour enfants, des blouses et des drapés médicaux, des étoffes légères, des vêtements pour installations de forage et similaires, des abat-jours, et/ou comme fibres de renfort, telles que dans des matériaux plastiques, par exemple dans un polypropylène:
